# EUROPEAN PATENT APPLICATION

(11) **EP 4 618 558 A1**
(43) Date of publication of application: **17.09.2025**
(21) Application number: 24162801.5
(22) Date of filing: 11.03.2024
(51) Int. Cl.: H04N 21/43, H04N 5/92, H04N 9/802, H04N 21/439

(54) **DEVICES AND METHOD FOR SYNCHRONIZATION OF TRACKING DATA WITH VIDEO DATA**

(71) Applicant: Stype Norway AS, 2030 Nannestad (NO)
(72) Inventor: Cajic, Stjepan, 88345 Grude (BA)
(74) Representative: Meissner Bolte Düsseldorf Patentanwälte Rechtsanwälte Partnerschaft mbB

(57) **Abstract**

The present invention pertains to a tracking system for synchronized transmission of tracking data, comprising: tracking device 1 configured to determine the position of the tracking device 1, and/or the position of a camera 5 to which the tracking system is attachable, and to generate tracking data, which contains information on the determined position; and a converter 2 configured to encode the tracking data in an audio signal. The invention is further directed to a converter for converting and/or encoding tracking data generated by a tracking device to/in an audio signal, a camera system for capturing synchronized tracking data and video data, and a method for synchronizing tracking data with video data.

## Description

The present invention pertains to a tracking system according to the subject-matter of claim 1, a converter according to the subject-matter of claim 4, a camera system according to the subject-matter of claim 6, and to a method for synchronizing tracking data with video data according to the subject-matter of claim 8. The present invention is preferably used with a camera for use in virtual production.

In various industries, such as filmmaking, camera tracking data is necessary in order to combine actual camera footage with virtual graphics. There are various ways to combine the actual camera footage with the virtual graphics and some of the ways are described in the industry with different names such as Augmented Reality (AR), Virtual Reality (VR), Extended Reality (XR). Camera tracking data often involves information about the camera's position, orientation, focal length, lens distortions, etc.

Synchronization of camera tracking data with visual frames recorded by the same camera is crucial for accurate rendering of the virtual graphics. In simple terms, it is important to know the precise camera position (and/or orientation, zoom level, etc.) at the exact moment when the specific video frame was shot, in order to create virtual graphics from the correct perspective that matches that of the camera when the video frame was shot.

Conventionally, for live broadcast application this synchronization is achieved by using the genlock to ensure that in a given amount of time tracking device will generate equal amount of camera tracking data packages, as the amount of frames camera has captured. In such way, the time delay between the video frames output by the camera, and the camera tracking data packages provided by the camera tracking system will be constant.

For post production applications, the synchronization is somewhat more complex as the recording is not done continually but the recording is often stopped and started.

The genlock is still required in post production workflows in order to ensure equal time separation between camera frames and tracking data packages, however, the challenge in post production recording is to record tracking data information, in such way that it is easy and simple to pair it with the camera video later on during post production.

Conventionally, this synchronization in post production is achieved by further embedding the timecode data both in the video file as well as in the tracking data files. However, these methods often encounter storage and alignment challenges, leading to inefficiencies and errors in post-production workflows.

In light of the above, it is an object of the present invention to improve the synchronization between camera tracking data and the corresponding video data captured by the camera.

The object of the invention is solved by a tracking system according to the subject-matter of claim 1, a converter according to the subject-matter of claim 4, a camera system according to the subject-matter of claim 6, and to a method for synchronizing tracking data with video data according to the subject-matter of claim 8. Preferred modifications are indicated in the dependent claims.

The problem of the invention is particularly solved by a tracking system for synchronized transmission of tracking data, comprising: a tracking device configured to determine the position of the tracking device, and/or the position of a camera to which the tracking system is attachable, and to generate tracking data, which contains information on the determined position (of the tracking system and/or the camera); and a converter configured to (receive the tracking data and to) encode the tracking data in an audio signal.

The present invention introduces a novel approach to synchronize tracking data with video data, such as visual frames captured by a camera. Instead of relying on conventional methods, the present invention leverages audio signals to transmit tracking data. Conventional cameras are able to simultaneously record audio (data) along with video (data), wherein audio and video are practically perfectly synchronized. By embedding the tracking data in audio data, it can be ensured that the tracking data is inherently linked to the corresponding video frames in the video data, and that the tracking data is virtually perfectly synchronized to the video data. If there exists a minor temporal misalignment between the audio data and the video data recorded by the camera, e.g. due to the processing time of the tracking system, such delay is generally known or can be readily determined, and can subsequently be corrected.

The improvements introduced by this invention facilitate combining the captured video content with the virtual elements in real-time, without the need for post-processing.

The system comprises a tracking device that can be mounted on the camera, responsible for generating tracking data. Suitable tracking devices include systems based on odometry, GPS or optical tracking methods such as SLAM. An optical tracking system suitable for determining the position and pose of a camera is described, for example, in EP 3 985 609 A1.

The tracking device is configured to determine its own position, and/or the position of a camera to which the tracking system is mounted. The tracking system is configured to be rigidly attachable to the camera, such that the relative position and orientation between the camera and the tracking system does not change during use. The position of the camera can then be determined from the position of the tracking device and information on the relative position and orientation between camera and tracking system.

As stated, the tracking device is responsible for generating the tracking data. The tracking data contains the parameters that affect the final appearance of the video captured by the camera. The primary thing that affects the video is the actual movement of the camera while shooting. The tracking data can, therefore, include information about the position and orientation of the camera. In this regard, the tracking device can, for example, be a device that uses GPS for position estimation, a device that uses its own optical sensor and the processing means to locate itself within its surroundings based on visual cues, a device that uses a gyroscope and/or an accelerometer and/or a compass, or a device that uses mechanical encoders to track the movement of the camera, or any combination thereof.

This invention enables users to seamlessly cut and edit the video clips in software tools such as Adobe Premiere, making a rough edit like they do when editing footage made by traditional filming methods which do not involve camera tracking. As they move clips around, the tracking data contained in the audio signal follows the clip in the editing timeline.

After the rough edit is done, the user can export the edited timeline, together with the tracking data embedded in the audio signal. From this edited material, the user can easily extract the tracking data, and render the virtual backgrounds to be paired with the video data. This way, the user does not have to think about where each tracking data file is, making the workflow intuitive and user friendly. Further, by recording the tracking data directly with the camera, in unison with the video data, a virtually perfect synchronization between tracking data and video data can be ensured throughout the recording process.

In the context of the present invention, video data designates data recorded by the optical system of a camera, which is usually embodied by a series of video/visual frames. Video data may be referred to as video, or (video/visual) frames, which are recorded by the camera. The video data is recorded together with an audio signal provided at an audio input of the camera, and stored with the video data in a synchronized manner.

In the context of the present invention, the term "audio signal" designates an analog audio signal that may be output through conventional audio interfaces such as a jack connector. The audio signal is provided by the converter, which is configured to create the audio data in a manner that it contains tacking data provided by the tracking device. This audio signal can then be fed directly to the audio input of the camera, and thus embedded within the audio recorded by the camera, forming a unified audio-video clip. The tracking system can be connected directly to the camera's audio input so the audio signal never needs to actually take the form of a sound traveling through air.

In the context of the present invention, tracking data designates digital data containing at least position information, such as an absolute position in 3D space. As mentioned previously, the position information may refer to the position of the tracking device, and/or to the position of the camera. The tracking data can also include information on the orientation of the camera/and or the tracking device. From position information and orientation information, the pose of the camera can be determined, wherein the pose designates a combination of the camera's position and orientation, which may be described by a vector parallel to the optical axis of the camera and pointing in the direction of the camera's field of view.

In order to improve the usefulness of the invention, further data relevant for the rendering of virtual graphics can be encoded together with the tracking data, for example, information about the lens zoom level, focus, focal length, lens distortions because these parameters are also some of the ones that affect the appearance of the captured video. According to preferred embodiments, the tracking system is configured to incorporate this information in the tracking data.

According to a preferred embodiment, the tracking system comprises an audio interface for outputting the audio signal to an audio input, preferably an audio input of the camera. The tracking system can be connected directly to the camera's audio input so the audio signal never needs to actually take the form of a sound traveling through air. This improves the synchronization between the tracking data (embedded in the audio signal) and the video data.

It is further preferred that the tracking system comprises a data input configured to receive lens data, wherein the converter is configured to encode the lens data together with the tracking data. In the context of the present invention, the term "lens data" designates information on the camera lens configuration that is relevant for a rendering process, e.g. information about the lens zoom level, focus, focal length, lens distortions because these parameters are also some of the ones that affect the appearance of the captured video.

Since the converter is configured to encode such lens data together with the tracking data, lens data can be incorporated in the audio signal output to the camera, together with the tracking data. This yields the same advantages for the later retrieval of the lens data as for the tracking data, i.e. the information is contained in the unified audio-video clip recorded by the camera.

In the context of the present disclosure, the term "tracking data" is to be understood to comprise lens data, if it is provided to the tracking system and encoded in the audio signal.

The object of the invention is further solved by a converter for converting tracking data generated by a tracking device to an audio signal, the converter comprising a tracking data input configured to receive tracking data from a tracking device, and a conversion unit configured to receive the tracking data and to encode the tracking data in an audio signal. The conversion of tracking data generated by a tracking device to an audio signal is equivalent to encoding of tracking data generated by a tracking device in an audio signal.

The technical advantages achievable with the converter of the present invention correspond to those achievable with the tracking system described above. Aspects, features and advantages described in the context of the inventive tracking system are also applicable to the inventive converter, and vice versa.

The advantage of providing a converter in accordance with the present invention is that the converter can be used to synchronize tracking data from an existing tracking device with video data from an existing camera with high precision without requiring any specific additional equipment. The central idea of the invention to embed tracking data in the audio track of a combined audio-video signal that is captured by a camera is also realized with the converter.

It is preferred that the converter comprises an audio interface for outputting the audio signal to an audio input (of a camera with which the converter is used). Preferably, the audio interface is a simple jack audio interface. This facilitates the connection between converter and camera.

The object of the invention is further solved by a camera system for capturing synchronized tracking data and video data, comprising a camera and a tracking system as described above, wherein the tracking system is attached to the camera and wherein, preferably, the audio interface of the tracking system is connected to an audio input of the camera.

The technical advantages achievable with the camera system of the present invention correspond to those achievable with the tracking system and the converter described above. Aspects, features and advantages described in the context of the inventive tracking system and converter are also applicable to the inventive camera system, and vice versa.

It is preferred that the camera is configured to apply an adjustable delay to the received audio signal with respect to the video data. In order to improve the usefulness of the invention, the adjustable delay in the camera can be implemented as a software feature. The adjustable delay is configured to effect the camera to record the audio signal with an adjustable timing offset, so that it compensates for the fixed delay produced by the tracking system while calculating the tracking data. In this way, the audio signal can be matched in time with the video data. If the timing offset is not introduced during recording, it is possible to offset the audio in later stages of post production. For example, if no time offsetting was done, during the rough editing the user would need to ensure that each clip is several frames longer that it needs to be so that each useful video frames have a corresponding data pair in the audio signal.

The object of the invention is further solved by a method for synchronizing tracking data with video data, preferably using a camera system as described above, the method comprising: generating tracking data which preferably contains information on a determined position of a tracking device and/or a camera; encoding the tracking data in an audio signal; outputting the audio signal to an audio input of a camera; recording the audio signal, preferably synchronous with video data, with the camera.

The technical advantages achievable with the method of the present invention correspond to those achievable with the tracking system, converter and camera system described above. Aspects, features and advantages described in the context of the inventive tracking system, converter and camera system are also applicable to the inventive method, and vice versa.

Preferably, the method comprises the step of applying an adjustable delay to the audio signal with respect to the video data. The step of applying the adjustable delay is preferably performed before or during recording the audio signal. This allows to take into account delays caused by the generation of the tracking data, its subsequent encoding in an audio signal and the outputting to the audio input of the camera. This leads to an improved synchronization between tracking data and video data. Since the delay caused by the generation of the tracking data, its subsequent encoding in an audio signal and the outputting to the audio input of the camera is essentially constant, it can be determined once. The delay applied to the audio signal can then be adjusted accordingly. Preferably, the step of applying the adjustable delay is performed in the camera. It is preferably implemented as a software routine.

The present invention bears the advantage of simplified data synchronization. It eliminates the need for complex organisation of files, or timecode synchronization methods. Furthermore, a reduction in storage overhead is achieved: Audio-based transmission minimizes the storage requirements compared to traditional data files. Furthermore, the invention provides for a seamless integration: Since audio and visual data are inherently linked within the same clip recoded by the camera, post-processing workflows are streamlined and intuitive.

The tracking data contains digital information. The invention transmits this data as audio, which is essentially analog. The invention, therefore, converts digital data into an analog signal before transmitting it to the camera.

There are various ways in which the said conversion can be done.

One embodiment of the invention utilizes frequency and amplitude modulation to encode the (digital) tracking data in an (analog) audio signal.

In designing the digital to analog converter, it is preferable to maximize robustness to noise while ensuring sufficient bandwidth. One way to accomplish this is to specify the mapping between digital bits vs analog frequencies and amplitudes and the minimal sampling rate.

For example, each successive 2 bits of digital data can be encoded with an analog signal S of duration T. S is characterized by two types of frequency - high (Fh) or low (Fl). S is also characterized by two types of amplitude - high (Ah) or low (Al).

Encoding tracking data in an audio signal (and subsequently sending it over the audio interface) involves modulating digital data onto an audio signal. The basic steps include digital-to-analog conversion, modulation (and transmission). The camera records an audio signal, so later on in post production, analog-to-digital conversion can be made and data extraction.

Audio modulation techniques are used to encode the tracking data in the audio signal (and to transmit the audio signal over analog channels) by varying certain parameters of the audio signal to encode the information. Some examples of audio modulation techniques that could be utilized to achieve the desired functionality are:
Amplitude Modulation (AM):
   Description: In AM, the amplitude of the carrier signal is varied in proportion to the amplitude of the message signal.
   Example: AM radio broadcasting, where the audio signal modulates the amplitude of a carrier wave.
Frequency Modulation (FM):
   Description: In FM, the frequency of a carrier signal is varied in proportion to the message signal.
   Example: FM radio broadcasting, where the audio signal modulates the frequency of the carrier wave.
Phase Modulation (PM):
   Description: This type of analog modulation in which the phase of a carrier signal is varied in proportion to the message signal.
   Example: Used in some communication systems and microwave links.
Single Sideband Modulation (SSB):
   Description: SSB transmits only one of the sidebands (upper or lower) along with the carrier, eliminating redundancy and conserving bandwidth.
   Example: Used in amateur radio and some shortwave broadcasting.
Quadrature Amplitude Modulation (QAM):
   Description: QAM combines amplitude and phase modulation, simultaneously transmitting multiple bits per symbol.
   Example: Used in digital cable television, satellite communication, and wireless networking.

Various audio modulation techniques can be used due to diverse requirements. The selection of modulation methods is driven by factors such as bandwidth efficiency, varying data rate needs, interference mitigation, hardware compatibility, power efficiency, security considerations, distance and coverage requirements.

Preferably, the audio carrier signal has a frequency in the range between 5 kHz and 20 kHz. The audio carrier signal frequency should be kept below half the sampling rate to avoid aliasing, typically not exceeding 24 kHz for compatibility with most equipment. In general, professional audio equipment uses a 48 kHz sampling rate for audio recording. This sampling rate is preferable for the audio signal output by the converter.

According to a preferred embodiment of the invention, the converter is configured to introduce redundant bits into the data to be converted into the analog signal to be used for error correction by the end consumer of this data.

The above and further features and advantages of the present invention will become more readily apparent from the following description of preferred embodiments of the invention with reference to the accompanying drawings, in which:
- Fig. 1: is a conceptual view of a camera system comprising a tracking system with converter according to an embodiment of the present invention;
- Fig. 2: is a conceptual view of a camera system comprising a tracking system with converter according to another embodiment of the present invention.

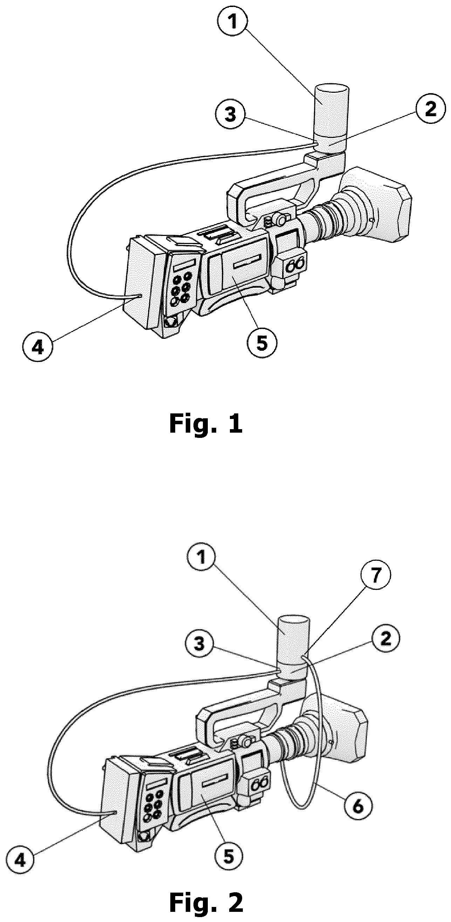

Fig. 1 shows a camera system in accordance with an embodiment of the present invention. The camera system comprises a camera 5, preferably a digital camera, that is configured to capture series of image frames as video data. The camera 5 comprises an audio input 4, to which an audio source such as a microphone may be connected.

The camera system of Fig. 1 further comprises a tracking system. The tracking system comprises a tracking device 1, which may be any kind of known tracking device such as GPS or a SLAM system. The tracking device 1 is configured to determine its position (from which the position of the camera 5 can be readily determined, since the tracking device 1 and the camera 5 are fixedly attached to one another, so that the tracking device 1 may also directly determine the position of the camera 5), and preferably information on the orientation of the tracking device and/or the camera. This information is generated by the tracking device 1 as (digital) tracking data.

The tracking system further comprises a converter 2. The converter 2 receives the tracking data from the tracking device 1, preferably via a tracking data input connected to the tracking device 1, and converts the tracking data into an audio signal, preferably by use of a conversion unit contained in the converter 2. This conversion comprises an embedding of the (originally digital) tracking data in the (analog) audio signal. This can be achieved, for example, by generating a carrier wave in the converter 2, onto which the tracking data is imposed by modulation of the carrier wave. For this, the converter 2 preferably contains a carrier wave synthesizer and means for modulating the carrier wave to embed the tracking information therein.

The tracking system, in particular the converter 2, comprises an audio interface which is embodied as audio output 3 in Fig. 1. The audio output 3 of the converter 2 is connected to the audio input 4 of the camera. Thus, the tracking data generated by the tracking device 1 and converted to or embedded in an audio signal by the converter 2, is directly fed to the camera and recorded as audio signal concurrently with the video data. The audio output 3 of the converter 2 is connected to the audio input 4 of the camera 5 via a cable. The connection could also be provided in a wireless manner, e.g. via bluetooth.

The described invention can also be used for transmitting the camera image together with the tracking data in real time for live broadcast applications over large distances. Typically, it is a challenge to ensure no timing discrepancies of delivering tracking data over IP infrastructure, while there is a reliable infrastructure in place to transmit video and audio data in sync from a remote location to the broadcast center.

Fig. 2 shows a modification of the embodiment of Fig. 1. The tracking system further comprises a lens data input 7 for receiving lens data from the camera 5. In the present embodiment, the lens data input 7 is connected to the camera 5 via a lens data cable 6. The connection could also be provided in a wireless manner, e.g. via bluetooth. The lens data comprises information on the camera's configuration that is relevant for a rendering process, e.g. information about the lens zoom level, focus, focal length, lens distortions because these parameters are also some of the ones that affect the appearance of the captured video. The lens data is received by the tracking system and provided to the converter 2 together with the tracking data. The converter 2 converts the lens data together with the tracking data to the audio signal, i.e. embeds the lens data together with the tracking data in the audio signal. The audio signal is then output to the audio input 4 of the camera 5 through the audio output 3 of the converter 2.

### List of reference signs:

- 1: tracking device
- 2: converter
- 3: audio interface/audio output
- 4: audio input
- 5: camera
- 6: lens data cable
- 7: lens data input

## Claims

1. A tracking system for synchronized transmission of tracking data, comprising:
• a tracking device (1) configured to determine the position of the tracking device (1), and/or the position of a camera (5) to which the tracking system is attachable, and to generate tracking data, which contains information on the determined position;
• a converter (2) configured to encode the tracking data in an audio signal.

2. The tracking system of claim 1, comprising an audio interface (3) for outputting the audio signal to an audio input, preferably an audio input of the camera (5).

3. The tracking system of claim 1 or 2, comprising a data input (7) configured to receive lens data, wherein the converter (3) is configured to encode the lens data together with the tracking data.

4. A converter (2) for converting tracking data generated by a tracking device (1) to an audio signal, the converter (2) comprising a tracking data input configured to receive tracking data from a tracking device (1), and a conversion unit configured to receive the tracking data and to encode the tracking data in an audio signal.

5. The converter of claim 4, comprising an audio interface (3) for outputting the audio signal to an audio input, preferably an audio input (4) of a camera (5).

6. A camera system for capturing synchronized tracking data and video data, comprising a camera (5) and a tracking system according to any of claims 1 to 3, wherein the tracking system is attached to the camera (5) and wherein, preferably, the audio interface (3) of the tracking system is connected to an audio input (4) of the camera (5).

7. The camera system of claim 6, wherein the camera (5) is configured to apply an adjustable delay to the received audio signal with respect to the video data.

8. A method for synchronizing tracking data with video data, preferably using a camera system according to claim 6 or 7, the method comprising:
• generating tracking data which preferably contains information on a determined position of a tracking device and/or a camera (5);
• encoding the tracking data in an audio signal;
• outputting the audio signal to an audio input (4) of a camera (5);
• recording the audio signal, preferably synchronous with video data, with the camera (5).

9. The method of claim 8, further comprising the step of applying an adjustable delay to the audio signal with respect to the video data.

10. The tracking system or the converter or the camera system or the method of any of the preceding claims, wherein the tracking data comprises one or more of the following information: information regarding the tracking device's and/or the camera's position, the tracking device's and/or the camera's orientation, the camera's focal length, and/or the camera's lens and/or distortions.

11. The tracking system or the converter or the camera system or the method of any of the preceding claims, wherein the encoding of the tracking data comprises a generation of an audio carrier signal and a modulation of the carrier signal to embed the tracking data in the audio signal.
